# FASCICULE DE BREVET EUROPEEN

(11) **EP 3 683 056 B1**
(45) Date de publication et mention de la délivrance du brevet: **02.03.2022**
(21) Numéro de dépôt: 20150917.1
(22) Date de dépôt: 09.01.2020
(51) Int. Cl.: B32B 37/14, B32B 38/04, B32B 3/12, B32B 3/26, B32B 5/12, B32B 5/26, B32B 7/027

(54) **PROCÉDÉ DE FABRICATION D'UNE STRUCTURE ACOUSTIQUEMENT RÉSISTIVE**
HERSTELLUNGSVERFAHREN EINER AKUSTISCH RESISTIVEN STRUKTUR
METHOD FOR MANUFACTURING AN ACOUSTICALLY RESISTIVE STRUCTURE

(30) Priorité: 15.01.2019 FR 1900374
(43) Date de publication de la demande: 22.07.2020
(73) Titulaire: AIRBUS OPERATIONS (S.A.S.), 31060 Toulouse (FR)
(72) Inventeur: BROSSARD, Denis, 31060 TOULOUSE Cedex 9 (FR); CHOTARD, Florian, 31060 TOULOUSE Cedex 9 (FR); RAVISE, Florian, 31060 TOULOUSE Cedex 9 (FR); SIMON, Karl, 31060 TOULOUSE Cedex 9 (FR)
(74) Mandataire: Gicquel, Olivier Yves Gérard

(56) Documents cités:
- EP-A1- 1 355 294
- FR-A1- 2 823 590
- FR-A1- 2 908 737
- US-A- 4 294 329

## Description

La présente demande se rapporte à un procédé de fabrication d'une structure acoustiquement résistive et l'invention est définie aux revendications 1-7 annexées.

Un panneau d'atténuation acoustique comportant une couche résistive à composante structurale renforcée est décrit par exemple dans le document FR 2 823 590 A1.

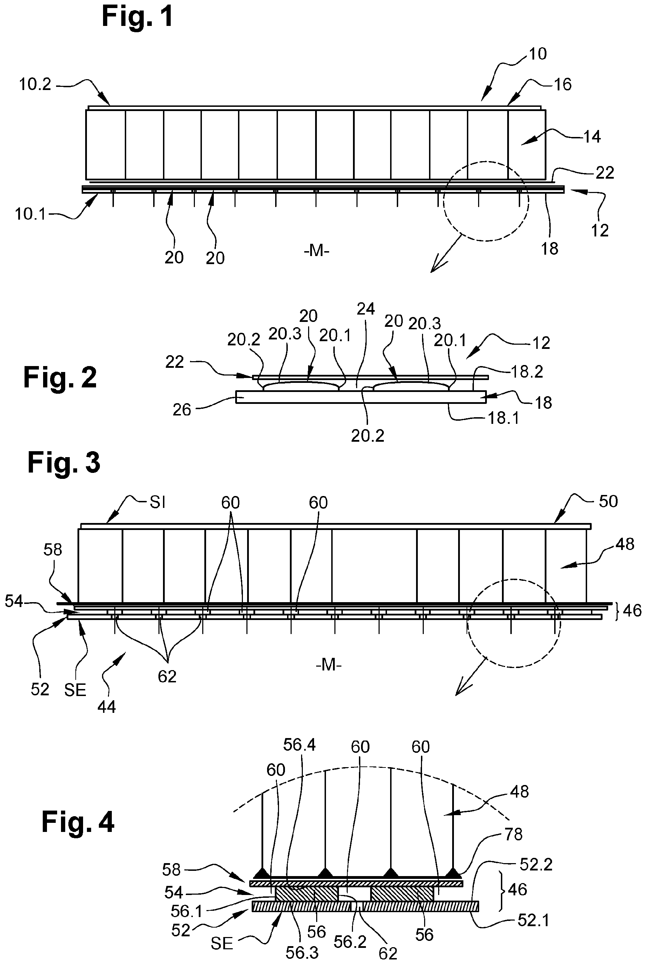

Selon un mode de réalisation connu visible sur les figures 1 et 2, un panneau d'absorption acoustique 10 comprend une surface extérieure 10.1, en contact avec un milieu M dans lequel se propagent des ondes acoustiques, et une surface intérieure 10.2 opposée à la surface extérieure 10.1. Le panneau d'absorption acoustique 10 comprend, de la surface extérieure 10.1 vers la surface intérieure 10.2, une structure acoustiquement résistive 12, une structure alvéolaire 14 et une couche réflectrice 16. Une structure acoustiquement résistive 12 comprend une couche externe 18 perforée présentant une face extérieure 18.1 qui correspond à la surface extérieure 10.1 et une face intérieure 18.2, des bandes de matière 20 fixées sur la face intérieure 18.2 de la couche externe 18, espacées entre elles et orientées selon une première direction, ainsi que des fils 22 rapportés sur les bandes de matière 20, espacés entre eux et orientés selon une deuxième direction sensiblement perpendiculaire à la première direction. Selon cette configuration, les bandes de matière 20 délimitent, entre la couche externe 18 et les fils 22, des cavités acoustiques 24. Pour que les performances acoustiques soient optimales, l'espacement entre les bandes de matière 20 doit être régulier et les chants 20.1, 20.2 des bandes de matière 20 doivent être plans et perpendiculaires à la couche externe 18.

Selon un mode de réalisation, la couche externe 18 et les bandes de matière 20 sont réalisées en matériau composite à partir de fibres carbone noyées dans une résine thermoplastique de type PEI (pour polyétherimide). Selon un mode opératoire, une première couche 26 de fibres de carbone est déposée sur une surface de dépose pour obtenir la couche externe 18, puis les bandes de matière 20 sont déposées sur la première couche 26. La première couche 26 et les bandes de matière 20 sont recouvertes d'un habillage de consolidation puis sont consolidées dans un autoclave. Après cette étape de consolidation, les chants 20.1, 20.2 des bandes de matière 20 sont courbes et les faces 20.3 des bandes de matière 20 opposées à la première couche 26 ne sont pas planes mais bombées, comme illustré sur la figure 2. En suivant, la première couche 26 est perforée pour obtenir la couche externe 18 perforée. Puis, les fils 24 sont fixés sur les bandes de matière 20 de manière à obtenir la structure acoustiquement résistive 12.

Ce mode de réalisation n'est pas pleinement satisfaisant car les chants 20.1, 20.2 des bandes de matière 20 sont courbes ce qui perturbe le traitement acoustique. Par ailleurs, les faces 20.3 des bandes de matière 20 étant bombées, les surfaces de contact entre les bandes de matière 20 et les fils 22 sont réduites ce qui peut nuire à la résistance mécanique de la liaison entre les bandes de matière 20 et les fils 22.

La présente invention vise à remédier à tout ou partie des inconvénients de l'art antérieur.

A cet effet, l'invention a pour objet un procédé de fabrication d'une structure acoustiquement résistive comprenant une couche externe perforée, une couche interne et une couche intercalaire positionnée entre les couches externe et interne présentant une pluralité de bandes de matière espacées entre elles, caractérisé en ce que le procédé comprend :
- une étape de réalisation d'une première couche de fibres de renfort,
- une première étape de consolidation de la première couche de fibres de renfort noyées dans une première résine thermoplastique présentant une première température de fusion,
- une étape de découpe de lumières dans la première couche consolidée afin d'obtenir la couche intercalaire qui présente une alternance de lumières et de bandes de matière,
- une étape de dépose d'une deuxième couche de fibres de renfort contre une première face de la couche intercalaire,
- une deuxième étape de consolidation de la deuxième couche de fibres de renfort noyées dans une deuxième résine thermoplastique présentant une deuxième température de consolidation inférieure à la première température de fusion de la première résine afin d'obtenir une couche externe non perforée liée à la couche intercalaire,
- une étape de perforation de la couche externe afin d'obtenir des trous traversant la couche externe au droit des lumières de la couche intercalaire,
- une étape de dépose de la couche interne sur une deuxième face de la couche intercalaire.

Le fait de découper des lumières dans une couche intercalaire déjà consolidée permet d'obtenir des bandes de matière avec des chants plats et des espacements réguliers entre les bandes de matière, ce qui contribue à optimiser le traitement acoustique. De plus, la couche intercalaire étant déjà consolidée et rigide lors de la consolidation de la deuxième couche, les faces des bandes de matière contre lesquelles est positionnée la couche interne sont sensiblement planes ce qui permet d'augmenter les surfaces de contact entre les bandes de matière et la couche interne par rapport à l'art antérieur.

Selon un mode de réalisation, la première résine est une résine de type PEEK et la deuxième résine est une résine de type PEI.

Selon une autre caractéristique, au moins un film de la deuxième résine est apposé, avant la première étape de consolidation, contre au moins une des première et deuxième faces de la première couche contre laquelle sera déposée la deuxième couche.

Selon un mode de réalisation, des premier et deuxième films de la deuxième résine sont apposés contre chacune des première et deuxième faces de la première couche avant la première étape de consolidation.

Selon une autre caractéristique, plusieurs coques comportant la couche externe perforée et la couche intercalaire sont assemblées de manière à obtenir une coque rigide, approximativement cylindrique, et l'étape de dépose de la couche interne consiste à bobiner au moins un fil sur les bandes de matière de la couche intercalaire.

Selon un mode de réalisation, chaque fil bobiné formant la couche interne est lié aux bandes de matière de la couche intercalaire en activant le deuxième film.

L'invention a également pour objet une structure acoustiquement résistive obtenue à partir du procédé selon l'invention ainsi qu'un panneau d'absorption acoustique comportant une telle structure acoustiquement résistive.

D'autres caractéristiques et avantages ressortiront de la description de l'invention qui va suivre, description donnée à titre d'exemple uniquement, en regard des dessins annexés parmi lesquels :
[Fig. 1] est une coupe d'un panneau d'absorption acoustique qui illustre un mode de réalisation de l'art antérieur,
[Fig. 2] est une coupe illustrant en détail la structure acoustiquement résistive du panneau d'absorption acoustique visible sur la figure 1,
[Fig. 3] est une coupe d'un panneau d'absorption acoustique qui illustre un mode de réalisation de l'invention,
[Fig. 4] est une coupe illustrant en détail la structure acoustiquement résistive du panneau d'absorption acoustique visible sur la figure 3,
[Fig. 5] est une coupe d'une première couche formant une couche intercalaire d'une structure acoustiquement résistive avant une première étape de consolidation qui illustre un mode de réalisation de l'invention,
[Fig. 6] est une vue en perspective de la première couche visible sur la figure 5 après la première étape de consolidation,
[Fig. 7] est une vue en perspective de la couche intercalaire après une étape de réalisation de lumières qui illustre un mode de réalisation de l'invention,
[Fig. 8] est une coupe d'une couche externe et d'une couche intercalaire d'une structure acoustiquement résistive avant une deuxième étape de consolidation qui illustre un mode de réalisation de l'invention,
[Fig. 9] est une vue en perspective des couches externe et intercalaire visibles sur la figure 8, après la deuxième étape de consolidation,
[Fig. 10] est une coupe des couches externe et intercalaire visibles sur la figure 9 après une étape de réalisation de trous qui illustre un mode de réalisation de l'invention,
[Fig. 11] est une vue en perspective d'une coque comportant les couches externe et intercalaire visibles sur la figure 10,
[Fig. 12] est une vue en perspective d'un assemblage de coques composées chacune d'une couche externe perforée et d'une couche intercalaire avec une étape de dépose d'une couche interne,
[Fig. 13] est une vue latérale d'un aéronef, et
[Fig. 14] est une coupe d'une partie basse d'une entrée d'air d'une nacelle de l'aéronef visible sur la figure 13.

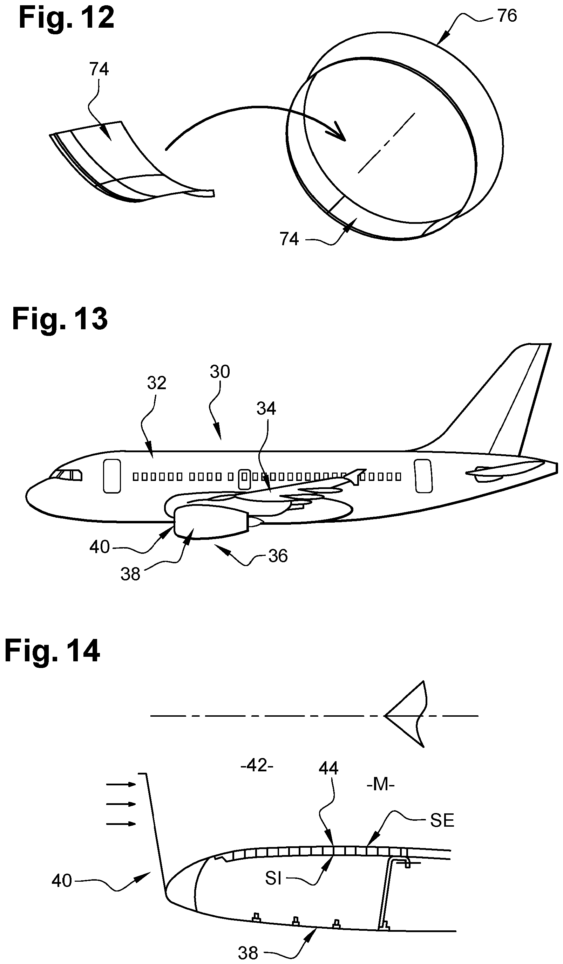

Sur la figure 13, on a représenté un aéronef 30 qui présente un fuselage 32, deux ailes 34, disposées de part et d'autre du fuselage 32, et des ensembles propulsifs 36 fixés sous les ailes 34. Chaque ensemble propulsif 36 comprend une nacelle 38 et une turbomachine positionnée à l'intérieur de la nacelle 38. Comme illustré sur la figure 14, la nacelle 38 comprend une entrée d'air 40 qui présente un conduit 42 permettant de canaliser un flux d'air vers la turbomachine et une soufflante. Ce conduit 42 est délimité par au moins un panneau d'absorption acoustique 44.

Selon un mode de réalisation visible sur les figures 3 et 4, chaque panneau d'absorption acoustique 44 présente une surface extérieure SE, en contact avec un milieu M dans lequel se propagent des ondes acoustiques, et une surface intérieure SI opposée à la surface extérieure SE. Le panneau d'absorption acoustique 44 comprend, de la surface extérieure SE vers la surface intérieure SI, une structure acoustiquement résistive 46, une structure alvéolaire 48 et une couche réflectrice 50. La structure alvéolaire 48 et la couche réflectrice 50 ne sont pas plus décrites car elles peuvent être identiques à celles de l'art antérieur.

Une structure acoustiquement résistive 46 comprend :
- une couche externe 52 présentant une face extérieure 52.1 (qui correspond à la surface extérieure SE) et une face intérieure 52.2,
- une couche intercalaire 54, en contact avec la face intérieure 52.2 de la couche externe 52, présentant une pluralité de bandes de matière 56 espacées entre elles et orientées selon une première direction, et
- une couche interne 58, en contact avec la couche intercalaire 54, présentant des fils (des mèches de fibres de renfort, des bandelettes ou des bandes de fibres de renfort) solidarisés à la couche intercalaire 54, espacés entre eux et orientés selon une deuxième direction différente de la première direction, sensiblement perpendiculaire à la première direction.

Selon cette configuration, les bandes de matière 56 de la couche intercalaire 54 délimitent, entre la couche externe 52 et la couche interne 58, des cavités acoustiques 60.

Chaque bande de matière 56 de la couche intercalaire 54 comprend des premier et deuxième chants 56.1, 56.2 qui s'étendent entre les couches interne et externe 52, 58, une surface extérieure 56.3 en contact avec la couche externe 52 et une surface intérieure 56.4 en contact avec la couche interne 58.

La couche externe 52 présente des trous 62 traversants, positionnés au moins dans les zones de la couche externe 52 situées au droit des cavités acoustiques 60.

Selon un mode de réalisation, la couche intercalaire 54 est obtenue à partir de fibres de renfort noyées dans une matrice d'une première résine thermoplastique présentant une première température de fusion.

Selon un mode de réalisation, les fibres de renfort sont des fibres de carbone. La première résine est une résine de type PEEK (pour polyétheréthercétone) qui présente une première température de fusion de l'ordre de 342°C et une première température de consolidation de l'ordre de 395°C +/- 5°C.

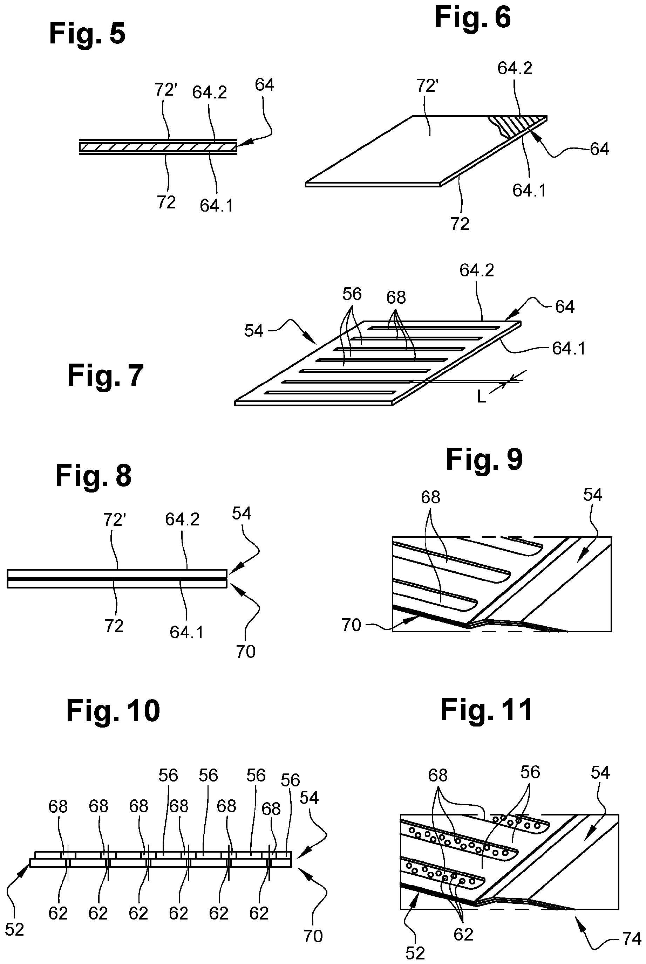

Selon un mode opératoire visible sur la figure 5, pour obtenir la couche intercalaire 54 lors d'une étape de réalisation d'une première couche 64, des fibres de renfort se présentant sous la forme de fils, de mèches, de bandes ou de bandelettes sont déposés sur une surface de dépose qui peut être plane ou courbe en fonction de la forme de la structure acoustiquement résistive souhaitée.

Après cette étape de réalisation, la première couche 64 de fibres de renfort est soumise à une première étape de consolidation à la première température de consolidation pour la rigidifier. A cet effet, la première couche 64 de fibres de renfort positionnée sur la surface de dépose est recouverte par un habillage de consolidation et soumise à un cycle de consolidation (variation de température et de pression). Les fibres de renfort peuvent être pré-imprégnées de résine ou l'apport de résine est réalisé concomitamment à la première étape de consolidation.

A l'issue de cette première étape de consolidation, la première couche 64 se présente sous la forme d'une coque rigide et comprend des première et deuxième faces 64.1, 64.2 orientées respectivement vers la couche externe 52 et vers la couche interne 58 une fois les différentes couches assemblées.

Lors d'une étape de découpe, la première couche 64 consolidée est découpée pour former des lumières 68 la traversant afin d'obtenir la couche intercalaire 54 qui présente une alternance de lumières 68 et de bandes de matière 56, comme illustré sur la figure 7. Selon un mode opératoire, la première couche 64 consolidée est découpée grâce à une découpe par jet d'eau, par laser ou par tout autre moyen.

Selon l'invention, les premier et deuxième chants 56.1, 56.2 sont sensiblement plats et perpendiculaires aux première et deuxième faces 64.1, 64.2 qui sont sensiblement planes. De plus, la largeur L de chaque bande de matière 56 est parfaitement maîtrisée, si bien que les espacements entre les bandes de matière 56 sont réguliers.

Une deuxième couche 70 de fibres de renfort correspondant à la couche externe 52 est plaquée contre la première face 64.1 de la couche intercalaire 54, comme illustré sur la figure 8.

La deuxième couche 70 peut être obtenue en déposant sur une deuxième surface de dépose des fils, des mèches, des bandelettes ou des bandes de fibres de renfort pré-imprégnées de la deuxième résine. Cette étape de réalisation de la deuxième couche 70 peut être accomplie en parallèle des étapes de dépose, de consolidation et de découpe de la couche intercalaire 54.

Selon un mode de réalisation, cette deuxième couche 70 comprend des fibres de renfort pré-imprégnées d'une deuxième résine thermoplastique présentant une deuxième température de consolidation inférieure à la première température de fusion. Selon un mode de réalisation, la deuxième résine est une résine de type PEI qui présente une deuxième température de fusion de l'ordre de 210 °C et une deuxième température de consolidation de l'ordre de 295°C +/- 5°C.

La couche intercalaire 54 et la deuxième couche 70 sont soumises à une deuxième étape de consolidation à la deuxième température de consolidation pour rigidifier la deuxième couche 70 et lier la couche externe 52 à la couche intercalaire 54. A cet effet, la couche intercalaire 54 et la deuxième couche 70 sont recouvertes par un habillage de consolidation et soumises à un cycle de consolidation (variation de température et de pression). Comme pour la première couche 64, les fibres de renfort de la deuxième couche 70 peuvent être pré-imprégnées de résine ou l'apport de résine est réalisé concomitamment à la deuxième étape de consolidation.

Lors de cette deuxième étape de consolidation, la deuxième résine de type PEI est miscible dans la matrice de la première résine de type PEEK à la deuxième température de consolidation de l'ordre de 295°C +/-5°C inférieure à la première température de fusion de la première résine. La couche intercalaire 54 étant déjà rigidifiée, cette deuxième étape de consolidation ne déforme pas les premier et deuxième chants 56.1, 56.2 et la surface extérieure 56.4 des bandes de matière 56 qui restent parfaitement plans.

A l'issue de cette deuxième étape de consolidation, on obtient une couche externe 52 non perforée et une couche intercalaire 54 assemblées, comme illustré sur la figure 9.

Selon un mode de réalisation visible sur les figures 5 et 6, pour favoriser l'accroche entre la couche externe 52 et la couche intercalaire 54 lors de l'étape de réalisation de la première couche 64, au moins un film 72 de la deuxième résine est apposé contre au moins une des première et deuxième faces 64.1, 64.2 de la première couche 64 contre laquelle la deuxième couche 70 sera déposée. Ainsi, à l'issue de la première étape de consolidation, la première face 64.1 de la première couche 64 sur laquelle sera déposée la deuxième couche 70 est revêtue d'un film 72 de la deuxième résine.

Selon un mode opératoire, des premier et deuxième films 72, 72' de la deuxième résine sont apposés contre chacune des première et deuxième faces 64.1, 64.2 de la première couche 64 avant la première étape de consolidation. Ainsi, à l'issue de la première étape de consolidation, la première couche 64 consolidée comprend un premier film 72 de la deuxième résine colaminé sur sa première face 64.1 et un deuxième film 72' de la deuxième résine colaminé sur sa deuxième face 64.2. Le deuxième film 72' favorise l'adhésion entre la couche intercalaire 54 et la couche interne 58.

Selon un mode de réalisation, chaque film de résine 72, 72' a une épaisseur de l'ordre de 25 µm. Chaque film de résine 72, 72' recouvre la totalité de la première ou deuxième face 64.1, 64.2 sur laquelle il est apposée.

Après l'assemblage des couches externe et intercalaire 52, 54, les trous 62 sont réalisés dans la couche externe 52, comme illustré sur les figures 10 et 11. Ils peuvent être réalisés par tout moyen approprié. Les bandes de matière 56 de la couche intercalaire 54 peuvent être utilisées comme guide de perçage. L'étape de réalisation des trous 62 n'est pas plus décrite car elle peut être identique à celle de l'art antérieur.

A l'issue de cette étape de réalisation des trous 62, la couche externe 52 perforée et la couche intercalaire 54 forment une coque rigide 74. Plusieurs de ces coques 74 peuvent être reliées entre elles pour obtenir une coque 76 rigide, approximativement cylindrique, pour former le conduit 42.

A l'issue de cette étape d'assemblage, la couche interne 58 est déposée, par bobinage d'au moins un fil, sur la surface intérieure 56.4 des bandes de matière 56 de la couche intercalaire 54. Le fil bobiné formant la couche interne 58 est relié à la couche intercalaire 54 par tout moyen approprié, comme par exemple en activant le deuxième film 72'.

Après la mise en place de la couche interne 58, on obtient une structure acoustiquement résistive 46. En suivant, une structure alvéolaire 48 équipée d'une couche réflectrice 50 est reliée à la structure acoustiquement résistive 46 par tout moyen approprié, comme par exemple en utilisant un film adhésif 78, de manière à obtenir un panneau d'absorption acoustique 44 approximativement cylindrique.

Selon un autre mode de réalisation, une couche interne 58 est plaquée contre la couche intercalaire 54 et reliée à cette dernière, par tout moyen approprié, afin d'obtenir une structure acoustiquement résistive 46 qui peut être reliée à une structure alvéolaire 48 équipée d'une couche réflectrice 50 pour former un panneau d'absorption acoustique 44.

Bien entendu, le procédé de réalisation d'une structure acoustiquement résistive qui vient d'être décrit n'est pas limité au panneau d'absorption acoustique présent au niveau d'un conduit 42 d'une entrée d'air. Le panneau d'absorption acoustique ainsi formé peut être utilisé à d'autres endroits d'un aéronef ou dans d'autres domaines.

## Revendications

1. Procédé de fabrication d'une structure acoustiquement résistive (46) comprenant une couche externe (52) perforée, une couche interne (58) et une couche intercalaire (54) positionnée entre les couches externe (52) et interne (58) présentant une pluralité de bandes de matière (56) espacées entre elles, **caractérisé en ce que** le procédé comprend :
- une étape de réalisation d'une première couche (64) de fibres de renfort,
- une première étape de consolidation de la première couche (64) de fibres de renfort noyées dans une première résine thermoplastique présentant une première température de fusion,
- une étape de découpe de lumières (68) dans la première couche (64) consolidée afin d'obtenir la couche intercalaire (54) qui présente une alternance de lumières (68) et de bandes de matière (56),
- une étape de dépose d'une deuxième couche (70) de fibres de renfort contre une première face (64.1) de la couche intercalaire (54),
- une deuxième étape de consolidation de la deuxième couche (70) de fibres de renfort noyées dans une deuxième résine thermoplastique présentant une deuxième température de consolidation inférieure à la première température de fusion de la première résine afin d'obtenir une couche externe (52) non perforée liée à la couche intercalaire (54),
- une étape de perforation de la couche externe (52) afin d'obtenir des trous (62) traversant la couche externe (52) au droit des lumières (68) de la couche intercalaire (54),
- une étape de dépose de la couche interne (58) sur une deuxième face (64.2) de la couche intercalaire (54).

2. Procédé de fabrication d'une structure acoustiquement résistive (46) selon la revendication 1, **caractérisé en ce que** la première résine est une résine de type PEEK.

3. Procédé de fabrication d'une structure acoustiquement résistive (46) selon la revendication 1, **caractérisé en ce que** la deuxième résine est une résine de type PEI.

4. Procédé de fabrication d'une structure acoustiquement résistive (46) selon l'une des revendications précédentes, **caractérisé en ce qu'**au moins un film (72, 72') de la deuxième résine est apposé, avant la première étape de consolidation, contre au moins une des première et deuxième faces (64.1, 64.2) de la première couche (64) contre laquelle sera déposée la deuxième couche (70).

5. Procédé de fabrication d'une structure acoustiquement résistive (46) selon la revendication précédente, **caractérisé en ce que** des premier et deuxième films (72, 72') de la deuxième résine sont apposés contre chacune des première et deuxième faces (64.1, 64.2) de la première couche (64) avant la première étape de consolidation.

6. Procédé de fabrication d'une structure acoustiquement résistive (46) selon l'une des revendications précédentes, **caractérisé en ce que** plusieurs coques (74) comportant la couche externe (52) perforée et la couche intercalaire (54) sont assemblées de manière à obtenir une coque (76) rigide, approximativement cylindrique, et **en ce que** l'étape de dépose de la couche interne (58) consiste à bobiner au moins un fil sur les bandes de matière (56) de la couche intercalaire (54).

7. Procédé de fabrication d'une structure acoustiquement résistive (46) selon les revendications 5 et 6, **caractérisé en ce que** chaque fil bobiné formant la couche interne (58) est lié aux bandes de matière (56) de la couche intercalaire (54) en activant le deuxième film (72').

## Patentansprüche

1. Verfahren zur Herstellung einer akustisch resistiven Struktur (46) mit einer perforierten Außenschicht (52), einer Innenschicht (58) und einer Zwischenschicht (54), die zwischen der Außen- (52) und der Innenschicht (58) positioniert ist, die eine Mehrzahl von Materialstreifen (56) aufweist, die voneinander beabstandet sind, **dadurch gekennzeichnet, dass** das Verfahren Folgendes umfasst:
- einen Schritt des Herstellens einer ersten Schicht (64) aus Verstärkungsfasern,
- einen ersten Schritt des Verfestigens der ersten Schicht (64) aus Verstärkungsfasern, die in ein erstes thermoplastisches Harz eingebettet sind, das eine erste Schmelztemperatur aufweist,
- einen Schritt des Auschneidens von Öffnungen (68) in der verfestigten ersten Schicht (64), um die Zwischenschicht (54) zu erhalten, die abwechselnd Öffnungen (68) und Materialstreifen (56) aufweist,
- einen Schritt des Aufbringens einer zweiten Schicht (70) aus Verstärkungsfasern an einer ersten Fläche (64.1) der Zwischenschicht (54),
- einen zweiten Schritt des Verfestigens der zweiten Schicht (70) aus Verstärkungsfasern, die in einem zweiten thermoplastischen Harz eingebettet sind, das eine zweite Verfestigungstemperatur unter der ersten Schmelztemperatur des ersten Harzes aufweist, um eine nicht perforierte Außenschicht (52) zu erhalten, die mit der Zwischenschicht (54) verbunden ist,
- einen Schritt des Perforierens der Außenschicht (52), um Löcher (62) zu erhalten, die gegenüber den Öffnungen (68) der Zwischenschicht (54) durch die Außenschicht (52) hindurchgehen,
- einen Schritt des Aufbringens der Innenschicht (58) auf eine zweite Fläche (64.2) der Zwischenschicht (54).

2. Verfahren zur Herstellung einer akustisch resistiven Struktur (46) nach Anspruch 1, **dadurch gekennzeichnet, dass** das erste Harz ein PEEK-Harz ist.

3. Verfahren zur Herstellung einer akustisch resistiven Struktur (46) nach Anspruch 1, **dadurch gekennzeichnet, dass** das zweite Harz ein PEI-Harz ist.

4. Verfahren zur Herstellung einer akustisch resistiven Struktur (46) nach einem der vorhergehenden Ansprüche, **dadurch gekennzeichnet, dass** wenigstens ein Film (72, 72') des zweiten Harzes vor dem ersten Schritt des Verfestigens an mindestens einer der ersten und zweiten Flächen (64.1, 64.2) der ersten Schicht (64) aufgebracht wird, an welcher die zweite Schicht (70) aufgebracht wird.

5. Verfahren zur Herstellung einer akustisch resistiven Struktur (46) nach dem vorhergehenden Anspruch, **dadurch gekennzeichnet, dass** ein erster und zweiter Film (72, 72') des zweiten Harzes vor dem ersten Schritt des Verfestigens an jeder der ersten und zweiten Flächen (64.1, 64.2) der ersten Schicht (64) aufgebracht werden.

6. Verfahren zur Herstellung einer akustisch resistiven Struktur (46) nach einem der vorhergehenden Ansprüche, **dadurch gekennzeichnet, dass** mehrere Schalen (74), die die perforierte Außenschicht (52) und die Zwischenschicht (54) aufweisen, so zusammengesetzt sind, dass eine starre Schale (76) erhalten wird, die ungefähr zylinderförmig ist, und dadurch, dass der Schritt des Aufbringens der Innenschicht (58) darin besteht, mindestens einen Faden auf die Materialstreifen (56) der Zwischenschicht (54) zu wickeln.

7. Verfahren zur Herstellung einer akustisch resistiven Struktur (46) nach den Ansprüchen 5 und 6, **dadurch gekennzeichnet, dass** jeder aufgewickelte Faden, der die Innenschicht (58) bildet, mit den Materialstreifen (56) der Zwischenschicht (54) verbunden wird, indem der zweite Film (72') aktiviert wird.

## Claims

1. Method for producing an acoustically resistive structure (46) comprising a perforated external layer (52), an internal layer (58) and an interlayer (54) positioned between the external (52) and internal (58) layers having a plurality of mutually-spaced strips (56) of material, **characterized in that** the method comprises:
- a step of creating a first layer (64) of reinforcing fibres,
- a first consolidation step of consolidating the first layer (64) of reinforcing fibres embedded in a first thermoplastic resin having a first melting point,
- a step of cutting openings (68) in the consolidated first layer (64) so as to obtain the interlayer (54) that exhibits an alternation of openings (68) and of strips of material (56),
- a step of laying a second layer (70) of reinforcing fibres against a first face (64.1) of the interlayer (54),
- a second consolidation step of consolidating the second layer (70) of reinforcing fibres embedded in a second thermoplastic resin having a second consolidation temperature lower than the first melting point of the first resin so as to obtain a non-perforated external layer (52) bound to the interlayer (54),
- a step of perforating the external layer (52) so as to obtain holes (62) passing through the external layer (52) in line with the openings (68) of the interlayer (54),
- a step of laying the internal layer (58) on a second face (64.2) of the interlayer (54).

2. Method for producing an acoustically resistive structure (46) according to Claim 1, **characterized in that** the first resin is a resin of PEEK type.

3. Method for producing an acoustically resistive structure (46) according to Claim 1, **characterized in that** the second resin is a resin of PEI type.

4. Method for producing an acoustically resistive structure (46) according to one of the preceding claims, **characterized in that** at least one film (72, 72') of the second resin is applied, prior to the first consolidation step, to at least one of the first and second faces (64.1, 64.2) of the first layer (64) on which the second layer (70) will be laid.

5. Method for producing an acoustically resistive structure (46) according to the preceding claim, **characterized in that** first and second films (72, 72') of the second resin are applied to each of the first and second faces (64.1, 64.2) of the first layer (64) before the first consolidation step.

6. Method for producing an acoustically resistive structure (46) according to one of the preceding claims, **characterized in that** several shells (74) comprising the perforated external layer (52) and the interlayer (54) are assembled to obtain an approximately cylindrical rigid shell (76), and **in that** the step of laying the internal layer (58) consists in winding at least one filament onto the strips (56) of material of the interlayer (54).

7. Method for producing an acoustically resistive structure (46) according to Claims 5 and 6, **characterized in that** each wound filament forming the internal layer (58) is bound to the strips (56) of material of the interlayer (54) by activating the second film (72').
